# EUROPEAN PATENT APPLICATION

(11) **EP 4 763 820 A1**
(43) Date of publication of application: **24.06.2026**
(21) Application number: 24386146.5
(22) Date of filing: 20.12.2024
(51) Int. Cl.: C03C 21/00

(54) **CHEMICAL STRENGTHENING OF CONTOURED COVERS**

(71) Applicant: Apple Inc., Cupertino, CA 95014 (US)
(72) Inventor: Gutwald, Matthew J, Cupertino, CA 95014 (US); Vangelatos, Zacharias, Cupertino, CA 95014 (US); Limarga, Andi M, Cupertino, CA 95014 (US); Bartlow, Christopher C, Cupertino, CA 95014 (US); Nguyen, Que Anh S, Cupertino, CA 95014 (US)
(74) Representative: Rooney, John-Paul

(57) **Abstract**

Chemically strengthened contoured covers (120) for electronic devices (100) are disclosed. The contoured cover may include a cover member (130) having a three-dimensional shape and chemical strengthening of the contoured cover member (130) can provide impact resistance to the cover member (130). Enclosures and portable electronic devices that include a chemically strengthened contoured cover member (130) are also disclosed.

## Description

### FIELD

The described embodiments relate generally to strengthened covers for electronic devices and electronic devices including these covers. More particularly, the present embodiments relate to strengthened covers having a contoured shape, such as a three-dimensional shape, and portable electronic devices including these covers.

### BACKGROUND

Some conventional devices include a display that may be protected by a transparent component that protects the display from external elements. In some instances, the transparent component is formed from a glass material or plastic material. While glass provides increased scratch resistance and other beneficial properties, glass may be less resistant to impact. The systems and techniques described herein are directed to glass covers having been strengthened to provide improvements in mechanical properties, which may include improved impact resistance.

### SUMMARY

Aspects of the following disclosure relate to a contoured cover for an electronic device that is strengthened to provide impact resistance. The contoured cover may be positioned over a display of a portable electronic device. In some cases, the contoured cover includes a chemically strengthened cover member having a contoured shape.

The cover member may have a three-dimensional shape other than a flat sheet. In some cases, a peripheral portion of the cover member defines one or more curved surfaces. In some examples, the curved surfaces curve towards an interior of an enclosure of the electronic device. The curved peripheral portion may extend from another portion of the cover member that has less curvature. In some cases, the display extends along a curved interior surface of the cover member.

In some aspects of the disclosure, different surface regions of a curved peripheral portion of the cover member are strengthened differently. The customized strengthening of the curved peripheral portion can help to control locations and levels of tensile stress within the curved peripheral portion. Alternately or additionally, the customized strengthening of the curved peripheral portion can help control warping of the cover member during ion exchange and therefore may allow the cover member to maintain a desired shape.

The disclosure provides an electronic device comprising a display, a housing at least partially enclosing the display, and a cover member coupled to the housing, formed from an ion-exchangeable silicate material, and defining a contoured shape, at least a portion of the display positioned along an interior concave surface of the contoured shape, the cover member comprising a first compressive stress profile extending from an exterior convex surface and into the cover member, the exterior convex surface opposite to the interior concave surface, and the first compressive stress profile having a first maximum compressive stress and a first depth and a second compressive stress profile extending from the interior concave surface and into the cover member, the second compressive stress profile having a second maximum compressive stress and a second depth, the second maximum compressive stress greater than the first maximum compressive stress and the second depth less than the first depth.

Alternately or additionally, the disclosure provides an electronic device comprising a housing and a cover member coupled to the housing, defining a contoured shape, and formed from an ion-exchangeable silicate material comprising lithium ions, the cover member comprising an ion-exchanged layer defining a first layer depth from a curved exterior surface of the cover member, a second layer depth from a curved interior surface of the cover member that is opposite the curved exterior surface, the second layer depth less than the first layer depth, and a third layer depth from a side surface of the cover member, the third layer depth greater than the first layer depth, a first surface compressive stress at the curved exterior surface, a second surface compressive stress, greater than the first surface compressive stress, at the curved interior surface, and a display positioned below the cover member and at least partially within the housing.

Alternately or additionally, the disclosure provides an electronic device comprising a display, a housing at least partially surrounding the display, a cover member coupled to the housing, formed from an alkali aluminosilicate material and defining a contoured shape, the cover member positioned over the display and comprising a first compressive stress region defining a first compressive stress at a curved first exterior surface of the cover member and a first depth of compression, a second compressive stress region defining a second compressive stress at a curved first interior surface of the cover member and second depth of compression, the second compressive stress greater than the first compressive stress and the second depth of compression less than the first depth of compression, and a third compressive stress region extending from a side surface of the cover member to a third depth of compression, a fourth compressive stress region defining a fourth compressive stress at a second exterior surface of the cover member and a fourth depth of compression that is less than or equal to the first depth of compression, a fifth compressive stress region defining a fifth compressive stress at a second interior surface of the cover member and a fifth depth of compression that is greater than or equal to the second depth of compression, and a tensile zone at least partially surrounded by the first, the second, the third compressive stress regions.

### BRIEF DESCRIPTION OF THE DRAWINGS

The disclosure will be readily understood by the following detailed description in conjunction with the accompanying drawings, wherein like reference numerals designate like elements.
FIG. 1A shows a front perspective view of an example electronic device.
FIG. 1B shows a rear perspective view of the electronic device of FIG. 1A.
FIG. 2 shows an example cover member for an electronic device.
FIG. 3 shows an example of a strengthened contoured cover member.
FIG. 4 shows an example of a front perspective view of another example electronic device.
FIG. 5 shows an example of a cross-sectional view of an electronic device.
FIG. 6A shows another example of a strengthened contoured cover member.
FIG. 6B shows another example of a strengthened contoured cover member.
FIG. 6C shows another example of a strengthened contoured cover member.
FIG. 7 shows a cross-sectional view of an example contoured cover member.
FIG. 8A shows a cross-sectional view of another example contoured cover member.
FIG. 8B shows a cross-sectional view of another example contoured cover member.
FIG. 9A shows an example of an ion-exchanged layer in a peripheral portion of a contoured cover member.
FIG. 9B shows an example of an ion-exchanged layer in another peripheral portion of a contoured cover member.
FIG. 9C shows an example of an ion-exchanged layer in another portion of a contoured cover member.
FIG. 10A shows an example of an internal stress distribution in a peripheral portion of a contoured cover member.
FIG. 10B shows another example of an internal stress distribution in a peripheral portion of a contoured cover member.
FIG. 11 shows an example of a stress profile in a peripheral portion of a contoured cover member.
FIG. 12A shows an example of a stress profile in another portion of a contoured cover member.
FIG. 12B shows another example of a stress profile in another portion of the cover member.
FIG. 13 shows an example block diagram of components of an electronic device.

The use of cross-hatching or shading in the accompanying figures is generally provided to clarify the boundaries between adjacent elements and also to facilitate legibility of the figures. Accordingly, neither the presence nor the absence of cross-hatching or shading conveys or indicates any preference or requirement for particular materials, material properties, element proportions, element dimensions, commonalities of similarly illustrated elements, or any other characteristic, attribute, or property for any element illustrated in the accompanying figures.

Additionally, it should be understood that the proportions and dimensions (either relative or absolute) of the various features and elements (and collections and groupings thereof) and the boundaries, separations, and positional relationships presented therebetween, are provided in the accompanying figures merely to facilitate an understanding of the various embodiments described herein and, accordingly, may not necessarily be presented or illustrated to scale, and are not intended to indicate any preference or requirement for an illustrated embodiment to the exclusion of embodiments described with reference thereto.

### DETAILED DESCRIPTION

Reference will now be made in detail to representative embodiments illustrated in the accompanying drawings. It should be understood that the following descriptions are not intended to limit the embodiments to one preferred implementation. To the contrary, the described embodiments are intended to cover alternatives, modifications, and equivalents as can be included within the spirit and scope of the disclosure and as defined by the appended claims.

As described herein, a portable electronic device may include a sheet of glass or glass article that is positioned over the device display, also referred to as "cover glass." Generally, cover glass may be chemically strengthened through an ion exchange operation. The following disclosure relates to contoured covers for electronic devices that are strengthened to provide impact resistance. The contoured cover may be positioned over a display of a phone or another portable electronic device. In some cases, the contoured cover includes a chemically strengthened cover member having a contoured shape. The disclosure also relates to enclosures and portable electronic devices that include a chemically strengthened enclosure member having a contoured shape.

The cover member may have a three-dimensional or contoured shape other than a flat sheet. In some cases, the cover member includes a peripheral portion that defines one or more curved surfaces and therefore may alternately be referred to herein as a curved peripheral portion. In some examples, each of an exterior and an interior surface of the curved peripheral portion of cover member defines a curved profile or contoured shape. The exterior surface may define a convex curved profile and the interior surface may define a concave curved profile, so that the curved peripheral portion curves towards an interior of an enclosure of the electronic device. The curved peripheral portion may extend from another portion of the cover member that is substantially flat, such as a central portion of the cover member. The display or another component of the electronic device may be positioned in the interior of the enclosure.

The chemical strengthening of the cover may be configured so that the cover member assumes a desired shape. In some cases, customized strengthening of a curved peripheral portion of the cover member can help control warping of the cover member during ion exchange, helping to preserve the desired shape. Alternately or additionally, customized strengthening of the cover member can cause the cover member to change its shape towards the desired shape.

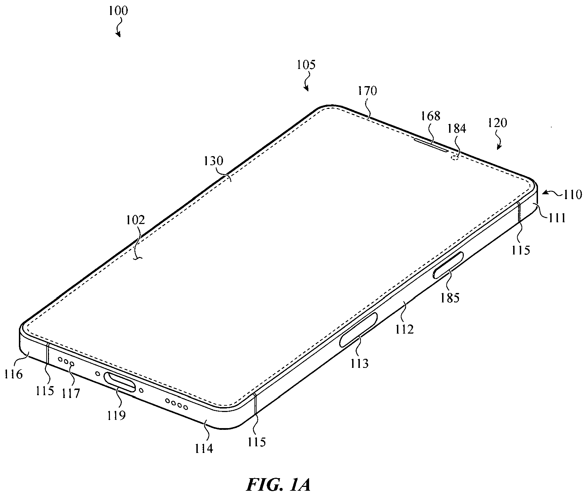

These and other embodiments are discussed below with reference to FIGs. 1A - 13. However, those skilled in the art will readily appreciate that the detailed description given herein with respect to these figures is for explanatory purposes only and should not be construed as limiting.

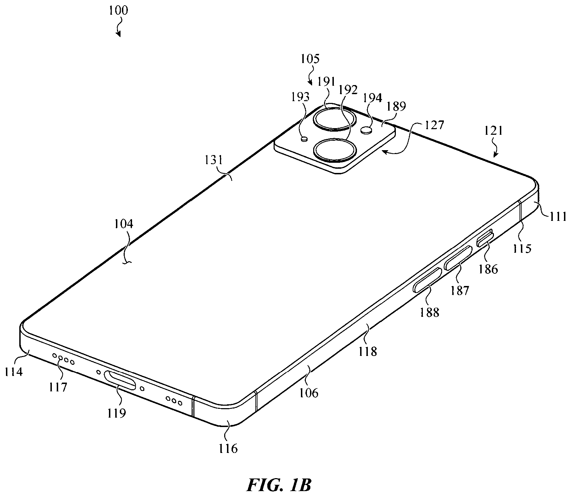

FIG. 1A shows a front perspective view and FIG. 1B shows a rear perspective view of an example electronic device 100. The electronic device 100 may be a mobile telephone (also referred to as a mobile phone). In other examples, the electronic device may have the form of a tablet computer, a laptop computer, a display monitor, a wearable electronic device (e.g., a smart watch or a headset), or another form of electronic device.

The electronic device 100 includes an enclosure 105. The enclosure 105 includes a housing 110, a front cover 120, and a rear cover 121. In some examples, the front cover 120 has a contoured shape and a cover member 130 included in the front cover 120 also has a contoured shape. The contoured shape of the cover member 130 may be any of the contoured shapes described herein.

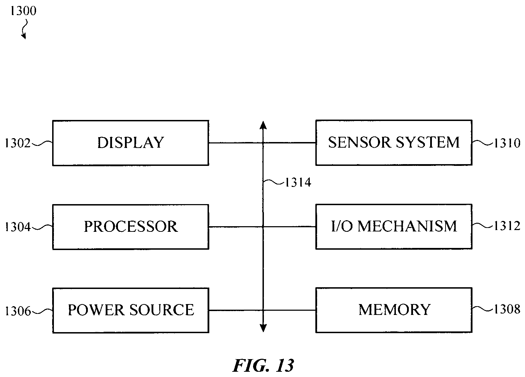

The enclosure 105 defines an internal cavity into which one or more device components is placed. Therefore, the enclosure 105 at least partially encloses one or more device components. The electronic device 100 includes a display assembly 170 and a rear sensor assembly 189. The electronic device 100 also includes a front-facing camera and/or a front-facing biometric sensor 184, which may be an optical sensor, and/or all or some of the other device components described with respect to FIG. 13. For example, the electronic device may include one or more of a display assembly, a processor, a power source, a sensor system (e.g., an optical sensor system), an input/output mechanism, a wireless communication or charging component, or a memory. The electronic device may also include electronic circuitry operably connected to the device components.

As shown in the example FIG. 1A, the front cover 120 is positioned over the display assembly 170. The display assembly may include a touch sensitive layer. In some embodiments, the display assembly is an organic light-emitting diode (OLED) display assembly or an active layer organic light-emitting diode (AMOLED) display assembly. In other embodiments, the display assembly is a liquid-crystal (LCD) assembly, a light-emitting diode (LED) display assembly, or an LED-backlit LCD display assembly.

The front cover 120 defines at least a portion of a front surface 102 of the electronic device. The front cover 120 defines an opening 168, which may allow input to a microphone or another device component. The cover 120 includes a cover member 130. The cover member may include or be formed of any of the materials described below with respect to the cover member 230. The cover 120 may also include a surface coating disposed over an exterior surface of the cover member 130, such as an anti-reflective coating and/or an anti-smudge (e.g., oleophobic) coating. The cover 120 may also include a coating disposed over an interior surface of the cover member 130. As examples, this interior coating may provide a decorative effect and/or provide a masking function.

As shown in the example of FIG. 1B, the electronic device 100 includes a set of rear sensors 189. The set of rear sensors 189 include multiple cameras 191 and 192. The electronic device 100 also includes components 193 and 194, which may be a light source, a sensor such as a depth sensor, or any other suitable component. At least a portion of the rear sensor assembly is positioned under the rear cover 121.

The rear cover 121 defines at least a portion of a rear surface 104 of the electronic device. The cover 121 includes a cover member 131. In some cases, the cover member 131 may have a contoured shape, which may be any of the contoured shapes described herein. In some cases, each the cover member 130 and the cover member 131 may have a contoured shape and may have different contoured shapes. In the example of FIG. 1B, the rear cover 121 defines protruding portion 127 at the location of the rear sensor assembly 189. The protruding portion 127 may define a set of openings and one or more components of the set of rear sensors and/or other components of the electronic device may extend at least partially through an opening of the set of openings. In some examples the cover member 131 defines the protruding portion 127. In other examples, the protruding portion 127 may be defined by multiple cover members, one of which is the cover member 131. In some embodiments, the rear cover 121 may be positioned over a display, which may be an additional display.

The cover member 131 may include or be formed of any of the materials described below with respect to the cover member 230. The cover 121 may also include a surface coating disposed over an exterior surface of the cover member 131, such as an anti-reflective coating and/or an anti-smudge (e.g., oleophobic) coating. The cover 121 may also include a coating disposed over an interior surface of the cover member 131. As examples, this interior coating may provide a decorative effect and/or provide a masking function.

Each of the front cover member 130, the rear cover member 131, the front cover 120 and the rear cover 121 may define any of a variety of surface textures. In some examples, the rear cover member 131 may have a texture that has a higher amplitude (alternately, height), about the same amplitude, and/or a lower amplitude than the anti-glare texture of the front cover member 130. In some cases, the rear cover member 131 may have a combination of surface textures. In some embodiments a surface texture of an exterior surface of a cover member may be different at exterior and interior surfaces. In some examples, a texture of a curved exterior surface of the cover member defines a first root mean square height (Sq) and a surface texture of a curved interior surface of the cover member defines a second root mean square height that is greater than the first root mean square height.

The housing 110 of the electronic device 100 is coupled to each of the front cover 120 and the rear cover 121. The housing 110 includes input devices 185, 186, 187, and 188. In the example of FIGs. 1A and 1B, each of the input devices may be a push button, a touch-activated button, or the like. The example of FIGs. 1A and 1B is not limiting and in other examples, the electronic device 100 may include an input device in the form of a dial, a crown, a wheel, or the like. The housing 110 also includes a window 113 that may facilitate transmission of a wireless communication signal. The housing 110 also defines openings to facilitate input to the electronic device. The openings 117 may allow input to a microphone and/or may allow output from a speaker. The opening 119 may define a port. In some cases, the housing 110 is formed of a metal material or includes one or more members formed from a metal material. Examples of metal materials suitable for the housing 110 include an iron-based alloy (e.g., steel), a titanium-based alloy, an aluminum-based alloy, a magnesium-based alloy, or the like. In other cases, the housing 110 is formed from or includes one or more members formed from a glass, a glass ceramic, or a ceramic material.

In the example of FIGs. 1A and 1B, the housing 110 is formed from multiple members, such as the members 111, 112, 114, 116, and 118. In some embodiments, the members 111, 112, 114, 116, and 118 are metal members that are separated by dielectric members 115 (e.g., polymer or polymer composite members). The dielectric members can provide electrical isolation between adjacent metal members. One or more of the metal members may be coupled to internal circuitry of the electronic device 100 and may function as an antenna for sending and receiving wireless communication. The housing 110 may define a side surface 106 of the electronic device and each of the metal members and the dielectric members may define a respective portion of the side surface. The example of FIGs. 1A and 1B is not intended to be limiting and other configurations may be suitable.

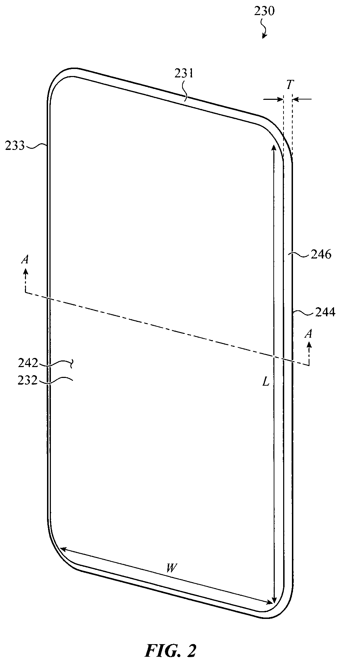

FIG. 2 shows an example cover member for an electronic device. In some examples, the cover member 230 is positioned over one or more of a display, a camera, or a set of sensors of the electronic device. The cover member 230 defines an exterior surface 242, an interior surface 244, and a side surface 246. When the cover member is assembled with other components of the enclosure, the interior surface 244 of the cover member 230 may at least partially define an interior surface of the enclosure.

In some embodiments, the cover member 230 has a three-dimensional shape other than a flat sheet. The cover member 230 defines a periphery 233. As shown in the example of FIG. 2, the cover member 230 includes a central portion 232 and a peripheral portion 231 that defines the periphery 233. In the example of FIG. 2, the peripheral portion 231 entirely surrounds the central portion 232. The central portion 232 may define a greater area of one or more surfaces of the cover member than the peripheral portion 231. The cover member 230 has a thickness, T, a length, L, and a width, W. The dimensions of the cover member 230 are suited to the electronic device. In some cases, the cover member 230 may have a thickness greater than 500 micrometers to 5 mm, from 400 micrometers to 3 mm, or from 200 micrometers to 1 mm.

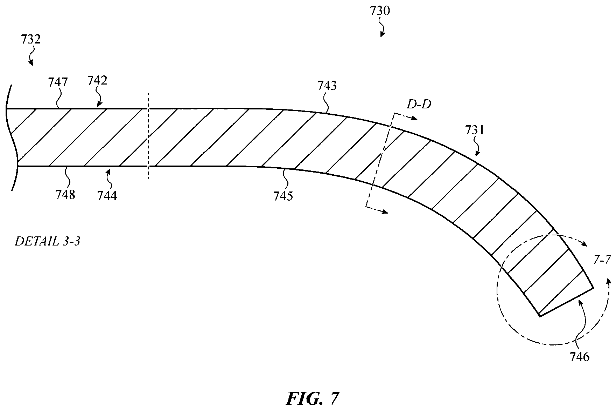

In some cases, the peripheral portion 231 is curved and the central portion 232 is less curved than the peripheral portion 231. In some examples, neither of the peripheral portion 230 nor the central portion 232 is substantially flat. In other examples, the central portion 232 may be substantially flat. In some examples, the curved surfaces of the peripheral portion curve towards an interior of an enclosure of the electronic device, an example of which is shown and described with respect to FIG. 7. The description provided with respect to FIG. 7 of a cover member having a convex exterior surface and a concave interior surface is generally applicable herein. However, this example is not intended to be limiting and in other examples, and in additional examples one or more curved surfaces of a cover member may curve away from an interior of the enclosure (e.g. a cover member may define a concave exterior surface and/or a convex interior surface).

The cover member 230 may include an ion-exchangeable material, such as a glass material or a glass ceramic material. The ion-exchangeable material may be a silicate material. The silicate material may be an alkali aluminosilicate material, such as aluminosilicate material including lithium ions. In some examples, the cover member 230 is a glass cover member that is formed of a silicate glass material. In other examples, the cover member 230 is formed of a silicate glass ceramic material. In some cases, the cover member 230 may have a laminate structure that includes one or more layers of a glass material, a glass ceramic material, and/or a polymer material. In some cases, an exterior layer of a laminate structure may be formed of a glass and/or glass ceramic material while in other cases the exterior layer of the laminate structure may be formed of a polymer material. In some embodiments, the glass material or glass ceramic material may be sufficiently transparent for use over a display and/or an optical sensor. In some cases, the glass material or the glass ceramic material may have a transmittance of at least 80% over an operating wavelength range of the display or sensor. In some examples, the operating wavelength range may be a visible wavelength range and/or an infrared wavelength range.

In some embodiments, the cover member 230 is strengthened by a process that includes one or more ion exchange operations. In some embodiments, the one or more ion exchange operations form an ion-exchanged layer that extends over an entirety of the exterior surface 242, the interior surface 244, and the side surface 246 of the cover member 230. The strengthening process typically includes at least one operation in which smaller ions in the ion-exchangeable material are exchanged for larger ions in order to create a compressive stress zone extending from one or more surfaces of the cover member 230 . For example, if the glass material comprises sodium ions, the sodium ions may be exchanged for potassium ions. Similarly, if the ion-exchangeable material comprises lithium ions, the lithium ions may be exchanged for sodium ions and/or potassium ions.

In some embodiments, strengthening of a contoured cover member by ion exchange changes the shape of the cover member. As an example, uniform strengthening of a cover member having a substantially flat central portion and a curved peripheral portion that extends out of the plane defined by the central portion may lead to undesirable changes in shape of the central portion and/or the curved peripheral portion. In some embodiments described herein, the strengthening of the cover member is customized so that the strengthened cover member has the desired shape. In some cases, the extent of shape change due to ion exchange is limited to maintain a desired shape of the cover member. In other cases, the strengthening is customized to allow changes in the shape of the cover member that result in the desired shape.

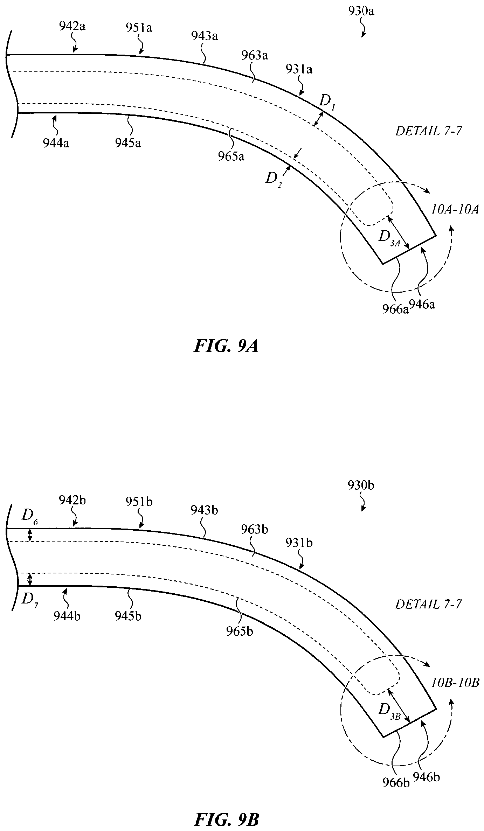

In some embodiments, a curved peripheral portion of the cover member is strengthened by ion exchange, but the strengthening varies within the curved peripheral portion. As previously discussed, customized strengthening of a curved peripheral portion of the cover member may allow control of the level and location of maximum tensile stress within the curved peripheral potion while still providing impact resistance. In some cases, an ion-exchanged layer extends from each of an exterior, an exterior, and a side surface of a curved peripheral portion but the depth and/or the composition of the ion-exchanged layer varies within the curved peripheral portion. Similarly, a compressive stress zone may extend from each of the exterior surface, the interior surface, and the side surface but various parameters of the compressive stress zone may vary within the curved peripheral portion. These parameters include, but are not limited to a depth of compression, a surface compressive stress, and a compressive stress profile of the compressive zone. The compressive stress zone may alternately be referred to as a compressive zone herein. The additional description of customized strengthening provided with respect to FIGs. 9A-9C, 10A-10B, and 11 is generally applicable herein.

During the strengthening process, one or more surfaces of the cover member may be selectively exposed to an ion-exchange medium in order to provide variations in the ion-exchanged layer and/or the compressive zone. In some cases, the one or more surfaces of the cover member may be exposed to the ion-exchange medium while ion-exchange is limited at another surface of the cover member. In some examples, a mask may be applied to limit ion-exchange at the other surface(s) of the cover member, such as when the ion-exchange medium is a molten salt bath. In some examples, a paste or powder ion-exchange medium may be selectively applied to the one or more surfaces of the cover member. Alternately or additionally, selective application of energy and/or guided ion flux may be used to enhance ion-exchange at the one or more surfaces. Alternately or additionally, the density of some regions of a cover member may be modified to change the amount of ion flux into these modified regions. In some cases, the thermal history of a glass region may be controlled to modify its density and thus the ion flux into the glass region.

In some embodiments, the strengthening of another portion of the cover member may be similar in some respects to the strengthening to the curved peripheral portion. For example, the regions of the ion-exchanged layer, the compressive regions, and the compressive stress profiles at the exterior surface of both portions of the cover member of both portions of the cover may be similar to each other. In some cases, the central portion 232 may be strengthened similarly to all or part of the curved peripheral portion 231 and the ion-exchanged layer and/or the compressive zone may vary in each of these portions of the cover member.

In some embodiments, another portion of the cover member is strengthened differently from the curved peripheral portion of the cover member. By the way of example, the central portion 232 may be strengthened differently from all or part of the curved peripheral portion 231. In some cases, the strengthening of the other portion of the cover member is symmetric, so that the regions of the ion-exchanged layer and the compressive regions are substantially the same at each of the exterior and the interior surfaces of the other portion. The strengthening of the peripheral portion and the other portion(s) of the cover member may be configured to produce the desired shape of the cover member. The strengthening process may be configured to account for any changes in shape that may result from the contoured shape of the cover member and/or asymmetry of the strengthening. In some embodiments, the strengthening process may be configured to minimize shape change within the cover member. In other embodiments, the shape of the cover member prior to ion exchange may be configured so that strengthening of the cover member helps to produces the desired shape.

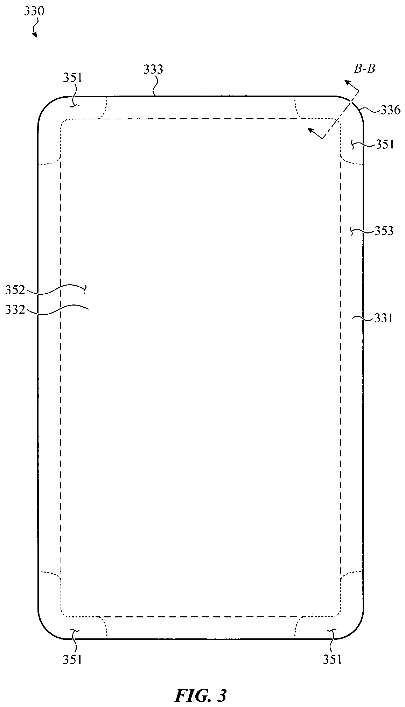

FIG. 3 shows an example of a strengthened contoured cover member. The cover member 330 includes strengthened peripheral zones 351 and 353. The cover member 330 also includes another strengthened zone 352. In some embodiments, the strengthened peripheral zones 351 and 353 are positioned within a curved peripheral portion 331 of the cover member. The strengthened zone 352 may be positioned within a central portion 332 of the cover member.

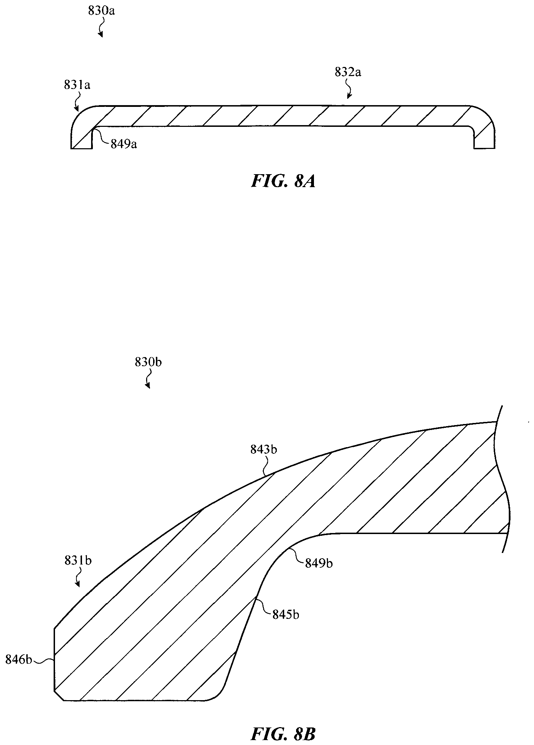

The peripheral portion 331 defines the periphery 333 of the cover member 330. The periphery 333 in turn defines corners 336. The peripheral portion 331 may define curved exterior and interior surfaces and these surfaces may have any of the curved shapes described herein, including the shapes described with respect to the curved peripheral portions of FIGS. 7, 8A, and 8B. The example of FIG. 3 is not intended to be limiting and in other examples the cover member need not define any corners or need not define four corners. The cover member 330 may be similar in thickness, materials, and other properties to the cover member 230.

As shown in the example of FIG. 3, each strengthened peripheral zone 351 of the set of strengthened peripheral zones 351 includes a respective corner 336 of the set of corners 336. Each strengthened peripheral zone 353 is positioned between a pair of strengthened peripheral zones 351.

In some embodiments, each of the strengthened peripheral zones 351 and 353 and the strengthened zone 352 are strengthened by ion exchange. In some cases, the strengthening varies within each of the strengthened peripheral zones 351 and 353. In a similar fashion as previously discussed with respect to FIG. 2, customized strengthening of strengthened peripheral zones 351 and 353 may allow control of the level and location of maximum tensile stress within the curved peripheral potion while still providing impact resistance. The additional description of customized strengthening provided with respect to FIGs. 9A-9C, 10A-10B, and 11 is generally applicable herein. The strengthened peripheral zones 351 and 353 and the strengthened zone 352 may be strengthened by ion exchange in a similar fashion as previously described with respect to the portion 231 of the cover member 230.

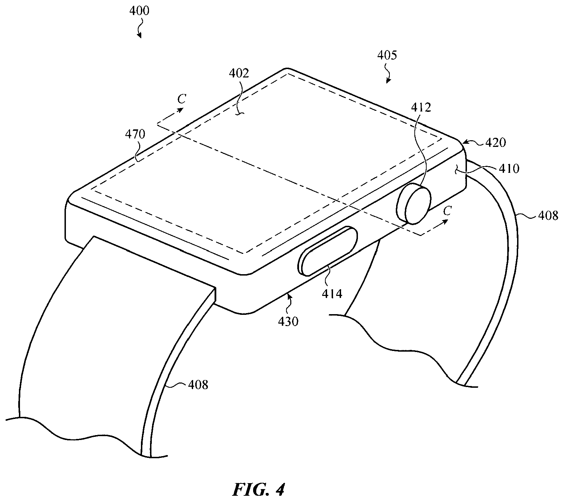

FIG. 4 shows an example of a front perspective view of another example electronic device. The device of FIG. 4 may be a wearable electronic device, such as a watch (e.g., an electronic watch, such as a smartwatch) or another wrist-worn device.

The electronic device 400 includes an enclosure 405. The enclosure includes a housing 410 and a front cover 420 that defines at least a portion of a front surface 402 of the electronic device. The front cover 420 is positioned over a display assembly 470. The enclosure may also include a rear cover that may be positioned over a sensing panel.

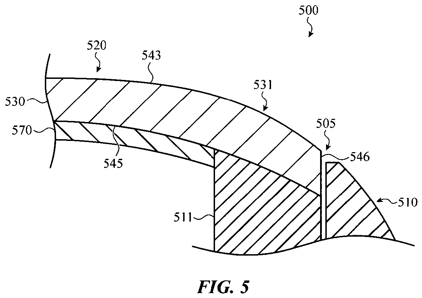

In the example of FIG. 4, the cover member 430 is contoured. In some cases, the cover member is shaped so that a central portion of the cover member protrudes with respect to a peripheral portion. Alternately, the central portion of the cover member may be referred to as being offset (e.g., in a vertical direction) with respect to the peripheral portion. The cross-sectional views of FIGs. 5, 7, 8A and 8B show examples of a contoured cover. In some cases, the thickness of the cover member 430 can vary, an example of which is shown in FIG. 8B. The cover member 430 may include or be formed of any of the ion-exchangeable materials previously described with respect to the cover member 230.

The enclosure 405 defines an internal cavity into which one or more device components is placed. The electronic device 400 includes a display assembly 470 and may also include a rear sensing panel. The electronic device 400 includes an input device 412, which may be a dial or crown having an outer surface configured to receive a rotary input. The electronic device 400 also includes an input device 414, which may be a button configured to receive a touch or press input. A band 408 or strap is attached to the housing 410 and is configured to secure the electronic device to a user.

FIG. 5 shows an example of a cross-sectional view of an electronic device. The cover 520 includes a cover member 530 that defines a contoured shape. In the example of FIG. 5, a peripheral portion 531 of the cover member 530 defines a curved exterior surface 543 and a curved interior surface 545. A display 570 is positioned along the curved interior surface 545 and may be coupled to the curved interior surface 545. The electronic device 500 may be an example of the electronic device 400 of FIG. 4, with the cross-section taken along line C-C in FIG. 4, or may be an example of other electronic devices described herein.

The peripheral portion 531 may be curved and may be strengthened similarly to any of the curved peripheral portions described herein, including the curved peripheral portions of FIGs. 3 and 7. In some cases, the strengthening of the peripheral portion 531 may be customized to produce a greater offset between a tensile stress region and the side surface 546 as compared to a uniformly strengthened peripheral portion 531. Similarly, the strengthening of the peripheral portion 531 may produce a greater offset between the tensile stress region and a transition, such as a corner, between an exterior surface 543 and a side surface 546 of the cover member 530.

An enclosure 505 of the electronic device 500 includes the cover 520 and a housing 510. The housing 510 may comprise one or more housing members as described with respect to the housing 110 of FIGs. 1A-1B. In the example of FIG. 5, part of the side surface 546 of the cover member 530 protrudes with respect to the housing 510, but this example is not intended to be limiting and in other examples the side surface 546 may be flush with the housing 510 or recessed with respect to the housing 510. The electronic device also includes a support 511 that is provided below the peripheral portion 531 of the cover member 530.

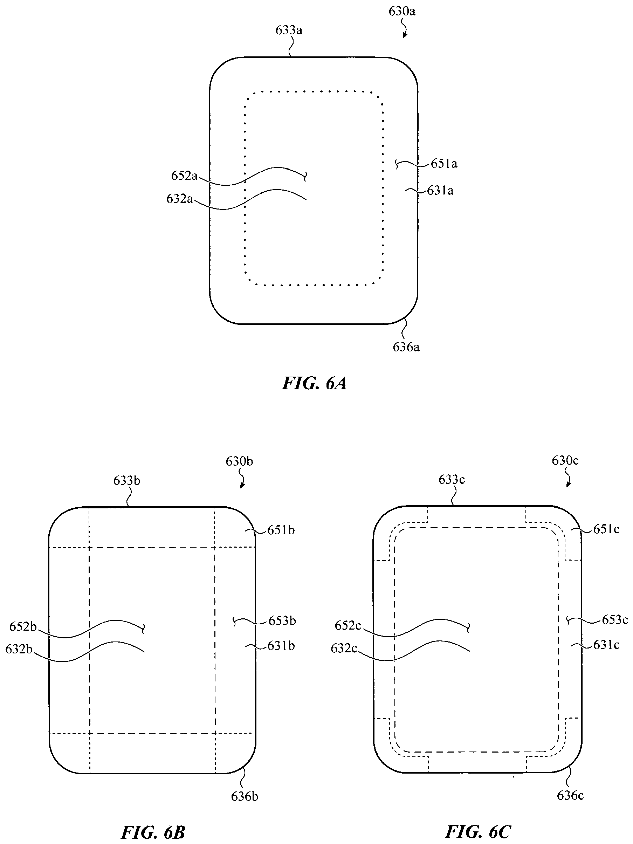

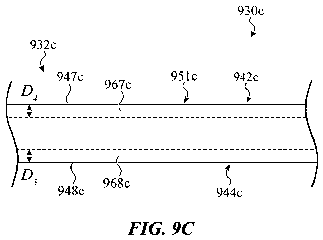

FIG. 6A shows another example of a strengthened contoured cover member. The cover member 630a includes a strengthened peripheral zone 651a that extends around the periphery 633a. The cover member 630a also includes a strengthened zone 652a. In some embodiments, the strengthened peripheral zone 651a is positioned in a curved peripheral portion 631a of the cover member and the strengthened zone 652a is positioned within a central portion 632a of the cover member. The strengthened peripheral zone 651a may be provided with customized strengthening to increase its impact resistance and in some examples may be strengthened differently than the strengthened zone 652a. In some examples, the strengthened peripheral zone 651a may be strengthened similarly to any of the peripheral zones described herein, including the peripheral zone strengthening described with respect to any of FIGs. 3, 7, 9A-9B, 10A-10B, and 11. In some examples, the strengthened zone 652a may be strengthened similarly to the central portion described with respect to FIGs. 3 or 9C.

The contoured cover member 630a defines a periphery 633a that includes corner regions 636a. The cover member 630a includes a peripheral portion 631a that extends along and defines the periphery 633a. The peripheral portion 631a may be curved and may be strengthened similarly to any of the curved peripheral portions described herein, including the curved peripheral portions of FIGs. 3 and 7. The curved peripheral portion 631a may have any of the curved shapes described herein, including the shapes described with respect to the curved peripheral portions of FIGS. 7, 8A, and 8B. The cover member 630a may be an example of the cover member 430 of FIG. 4 and may be similar in thickness, materials, and other properties to the cover member 230.

FIG. 6B shows another example of a strengthened contoured cover member. The cover member 630b includes a strengthened corner zone 651b and another strengthened peripheral zone 653b. The cover member 630b also includes a strengthened zone 652b. In some embodiments, the strengthened corner zone 651b and the strengthened peripheral zone 653b are positioned in a curved peripheral portion 631b of the cover member and the strengthened zone 652b is positioned within a central portion 632b of the cover member. The strengthened corner zones 651b may be provided with customized strengthening to increase their impact resistance. The strengthened corner zones 651b may be strengthened similarly to any of the curved peripheral portions described herein, including peripheral zone strengthening described with respect to any of FIGs. 3, 7, 9A-9B, 10A-10B, and 11.

In some cases, the strengthened corner zones 651b are strengthened differently from the strengthened peripheral zones 653b. For example, the asymmetry of the chemical strengthening of the exterior and the interior surfaces of the cover member may be greater in the strengthened corner zones 651b as compared to the strengthened peripheral zones 653b. In some cases, the strengthened peripheral zones 653b may be strengthened similarly to the strengthened zone 652b. In other cases, the strengthened peripheral zones 653b may be strengthened similarly to the strengthened corner zones 651b. In some examples, the strengthened zone 652b may be strengthened similarly to the central portion described with respect to FIGs. 3 or 9C.

The strengthened corner zone 651b and the strengthened peripheral zone 653b may have any of the curved shapes described herein, including the shapes described with respect to the curved peripheral portions of FIGS. 7, 8A, and 8B. The contoured cover member 630b defines a periphery 633b that includes corner regions 636b. The cover member 630b may be an example of the cover member 430 of FIG. 4 and may be similar in thickness, materials, and other properties to the cover member 230.

FIG. 6C shows another example of a strengthened contoured cover member. The cover member 630c includes a strengthened corner zone 651c and another strengthened peripheral zone 653c. The cover member 630c also includes a strengthened zone 652c. In some embodiments, the strengthened corner zone 651c and the strengthened peripheral zone 653c are positioned in a curved peripheral portion 631c of the cover member and the strengthened zone 652c is positioned within a central portion 632c of the cover member.

The strengthened corner zones 651c may be provided with customized strengthening to increase their impact resistance. The strengthened corner zones 651b may be strengthened similarly to any of the curved peripheral portions described herein, including peripheral zone strengthening described with respect to any of FIGs. 3, 7, 9A-9B, 10A-10B, and 11.

In some cases, the strengthened corner zones 651c are strengthened differently from the strengthened peripheral zones 653c. For example, the asymmetry of the chemical strengthening of the exterior and the interior surfaces of the cover member may be greater in the strengthened corner zones 651c as compared to the strengthened peripheral zones 653c. In some cases, the strengthened peripheral zones 653c may be strengthened similarly to the strengthened zone 652c. In some examples, the strengthened zone 652c may be strengthened similarly to the central portion described with respect to FIGs. 3 or 9C.

The strengthened corner zone 651c and the strengthened peripheral zone 653c may have any of the curved shapes described herein, including the shapes described with respect to the curved peripheral portions of FIGS. 7, 8A, and 8B. The contoured cover member 630c defines a periphery 633c that includes corner regions 636c. The cover member 630c may be an example of the cover member 430 of FIG. 4 and may be similar in thickness, materials, and other properties to the cover member 230.

FIG. 7 shows a cross-sectional view of an example contoured cover member. FIG. 7 may be an example of a cross-sectional view of the contoured cover member of the electronic device of FIG. 4 or of any other contoured cover member described herein. The partial cross-sectional view may be taken along line C-C in FIG. 4, along line B-B in FIG. 3, or along line A-A in FIG. 2. As shown in the example of FIG. 7, the cover member 730 has a three-dimensional shape that includes a curved peripheral portion. The cover member defines an exterior surface 742, an interior surface 744, and a side surface 746 that extends from the exterior surface 742 to the interior surface 744. The cover member 730 may be an example of the cover member 430 of FIG. 4 and may be similar in thickness, materials, and other properties to the cover member 230.

As shown in FIG. 7, the cover member 730 includes a curved first portion 731 and a second portion 732. The curved first portion 731 defines a side surface 746 of the cover member and is therefore an example of a curved peripheral portion of a cover member. In the example of FIG. 7, the curved first portion 731 curves towards an interior of the enclosure. The curved first portion 731 of the cover member 730 defines a curved exterior surface 743 and a curved interior surface 745. The curved exterior surface 743 may alternately be referred to as an exterior convex surface or as a curved first exterior surface of the cover member 730. The curved interior surface 745 may alternately be referred to as an interior concave surface or as a curved first interior surface of the cover member 730. The exterior convex surface 743 is generally opposite the interior concave surface 745 in the example of FIG. 7. The curved exterior surface 743 may alternately be referred to as a curved exterior surface region of the exterior surface 742 and the curved interior surface 745 may alternately be referred to as a curved interior surface region of the interior surface 744.

In some embodiments, the curved first portion 731 of the cover member extends from a second portion 732. The second portion 732 of the cover member 730 defines an exterior surface 747 and an interior surface 748. In some embodiments, a magnitude of the curvature of the exterior surface 747 is less than a magnitude of the curvature of the exterior surface 743 and a magnitude of the curvature of the interior surface 748 is less than a magnitude of a curvature of the interior surface 745. In some examples the magnitude of each of these curvatures is other than zero, so that none of these surfaces is substantially flat. In the example of FIG. 7, each of the exterior surface 747 and the interior surface 747 is substantially flat (alternately, substantially planar). The exterior surface 747 may alternately be referred to as a second exterior surface or as an exterior surface region of the exterior surface 742. The interior surface 748 may alternately be referred to as a second interior surface or as an interior surface region of the interior surface 744.

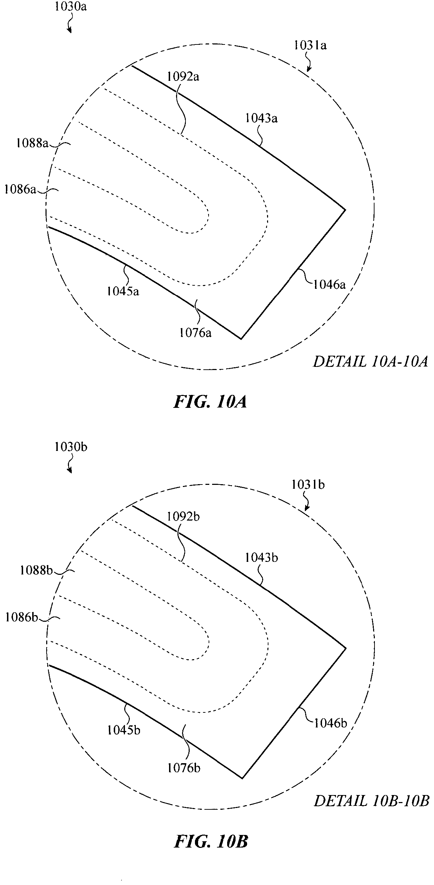

Each of the curved first portion 731 and the second portion 732 may be strengthened by ion exchange. For example, the curved first portion 731 may include an ion-exchanged layer that extends from the curved exterior surface 743, the side surface 746, and the curved interior surface 745, as shown in the example of FIG. 9A. Furthermore, the curved first portion 731 may include a compressive zone extending from the curved exterior surface 743, the side surface 746, and the curved interior surface 745 as well as a tensile zone, as shown in the examples of FIGs. 10A-10B. As previously discussed with respect to FIG. 3, the chemical strengthening of the curved first portion 731 may be customized so that the properties of the compressive zone may vary. The description provided with respect to FIGs. 3, 9A, and 10A-10B is generally applicable herein and is not repeated here.

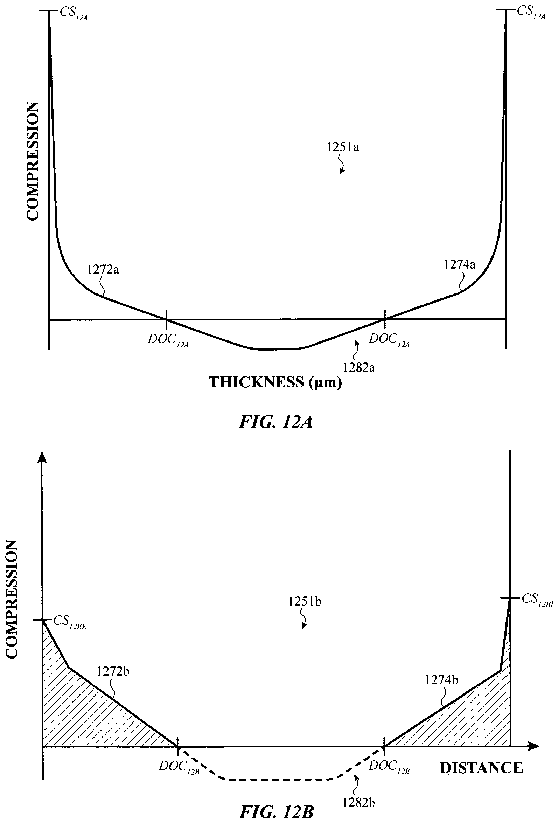

The second portion 732 may include an ion-exchanged layer that extends from the exterior surface 747 and from the interior surface 748. An example of such an of ion-exchanged layer are shown and described with respect to FIG. 9C. In alternate examples, a second portion 732 may be described as including an exterior ion-exchanged layer extending from the exterior surface 747 and an interior ion-exchanged layer extending from the interior surface 748. Furthermore, the second portion may include a compressive region extending from the exterior surface 747, a compressive region extending from the interior surface 748, and a tensile region between these two compressive regions as shown and described with respect to FIGs. 12A and 12B. The description provided with respect to FIGs. 9C, 12A and 12B is generally applicable herein and is not repeated here.

FIG. 8A shows a cross-sectional view of another example contoured cover member. The contoured cover member 830a includes a curved peripheral portion 831a and a central portion 832a that is substantially flat. The interior surface of the contoured cover member defines a greater curvature at the transition 849a between the central portion 832a and the curved peripheral portion 831a as compared to the example of FIG. 7. The cover member 830a may be an example of the cover member 430 of FIG. 4 and may be similar in thickness, materials, and other properties to the cover member 230.

FIG. 8B shows a cross-sectional view of another example contoured cover member. The contoured cover member 830b includes a curved peripheral portion 831b. In the example of FIG. 8B, the thickness of the contoured cover member 830b varies within the curved peripheral portion 831b. The contoured cover member 830b has a thin region 849b that is spaced apart from the side surface 846b. The example of FIG. 8B is not limiting and in other examples a contoured cover member may have a thicker region that is spaced apart from a side surface or periphery. The cover member 830b may therefore be described as having a nonuniform thickness between the exterior surface 843b and the interior surface 845b. The cover member 830b may be an example of the cover member 430 of FIG. 4 and may be similar in thickness, materials, and other properties to the cover member 230.

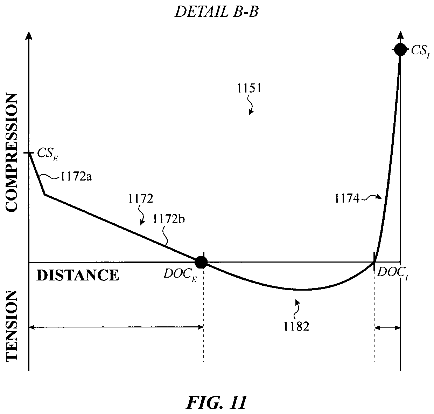

The contoured cover members shown in FIG. 8A and 8B may be strengthened similarly to other contoured cover members described herein. For example, a curved peripheral portion of the cover members 830a and 830b may be strengthened to have an ion exchanged layer that has similar features to those described with respect to FIG. 9A, compressive and tensile zones that have similar features to those described with respect to FIG. 10A, and a stress profile that has similar features to that described with respect to FIG. 11. Another peripheral portion of the cover members 830a and 830b may be strengthened to have an ion exchanged layer that has similar features to those described with respect to FIG. 9B, compressive and tensile zones that have similar features to those described with respect to FIG. 10B, and a stress profile that has similar features to that described with respect to FIG. 12A or 12B. A central portion of the cover members 830a and 830b may be strengthened to have an ion exchanged layer that has similar features to those described with respect to FIG. 9C and a stress profile that has similar features to that described with respect to FIG. 12A or 12B. For brevity, the description of FIGs. 9A-9C, 10A-10B, 11, and 12A-12B is not repeated here.

FIG. 9A shows an example of an ion-exchanged layer in a strengthened peripheral zone of a contoured cover member. In cases where the cover member includes two strengthened peripheral zones that are strengthened differently, the strengthened peripheral zone of FIG. 9A may be referred to as a first strengthened peripheral zone. The depth of the ion-exchanged layer 951a varies within the peripheral portion 931a of the cover member 930a. In the example of FIG. 9A, the depth D_{3A} of the ion-exchanged layer 951a from the side surface 946a is greater than the depth D₁ of the ion-exchanged layer 951a from the curved exterior surface 943a. The depth D₁ of the ion-exchanged layer 951a from the curved exterior surface 943a is greater than the depth D₂ of the ion-exchanged layer from the curved interior surface 945a. In some examples, the depth D₁ is greater than or equal to 25% and less than or equal to 60% of the thickness of the cover member, greater than or equal to 30% and less than or equal to 70% of the thickness, or greater than or equal to 30% and less than or equal to 50% of the thickness. In some examples, the depth D₂ is greater than or equal to 1% and less than 20% of the thickness of the cover member, greater than or equal to 1% and less than or equal to 15% of the thickness, or greater than or equal to 1% and less than or equal to 10% of the thickness.

In some examples, the depth D_{3A} may be greater than or equal to half of a thickness of the cover member 930a and less than or equal to the thickness of the cover member 930a. FIG. 9A also indicates the exterior surface 942a and the interior surface 944a of the cover member 930a. The exterior surface 942a may represent an entirety of an exterior surface of the cover member 930a and the interior surface 944a may represent an entirety of an interior surface of the cover member 930a.

In some embodiments, the composition of the ion-exchanged layer 951a varies in the strengthened peripheral zone. For example, a region 965a of the ion-exchanged layer 951a that extends from the curved interior surface 945a may include potassium ions introduced by ion exchange. In some cases, the potassium ions introduced by ion exchange largely determine the composition profile of ions introduced by ion exchange in this portion of the cover member. Regions 963a and 966a of the ion-exchanged layer 951a that extend from the curved exterior surface 943a and the side surface 946a may include sodium ions introduced by ion exchange and may optionally include potassium ions introduced by ion exchange. In some cases, a maximum sodium ion concentration in the region 966a of the ion-exchanged layer extending from the side surface 946a is greater than a maximum sodium ion concentration in the region 965a of the ion-exchanged layer extending from the curved interior surface 945a. Alternately or additionally, a maximum sodium ion concentration in the region 963a of the ion-exchanged layer 951a extending from the curved exterior surface 943a may be greater than a maximum sodium ion concentration in a region 965a of the ion-exchanged layer extending from the curved interior surface 945a.

In some cases, both the potassium ions and the sodium ions introduced by ion exchange determine the composition profile of ions introduced by ion exchange in the regions 963a and 966a of the cover member. The potassium ions introduced by ion exchange in the regions 963a and 966a of the ion-exchanged layer 951a may be concentrated nearer the curved exterior surface 943a and the side surface 946a. In these cases, the ion-exchanged layer 951a may have a first concentration of potassium ions at the curved exterior surface 943a that is less than a second concentration of potassium ions at the curved interior surface 945a.

In some embodiments, the greater depth of the ion-exchanged layer from the side surface as compared to the curved exterior and curved interior surfaces can help to improve the resistance of the cover member to an impact at peripheral region of the curved exterior surface. In some cases, the strengthening of the curved exterior, curved interior, and side surfaces is customized to increase the offset between the side surface and a region of higher tensile stress within the peripheral portion, as described in more detail with respect to FIG. 10A.

The asymmetry of the different regions of the ion exchanged layer 951a can affect the extent to which the ion exchange process modifies the shape of the cover member. In some examples, differences in the composition profile of the region 963a of the ion-exchanged layer 951a that extends from the curved exterior surface 943a and the composition profile of the region 965a of the ion-exchanged layer 951a that extends from the curved interior surface 945a can have a tendency to produce shape change of the cover member due to bending. In some embodiments, the overall effect of the ion-exchange process on the shape of the cover member as a whole is modeled based at least in part on changes in composition of the cover resulting from ion exchange and the geometry of the cover member prior to ion exchange. In some cases, the ion-exchanged layer 951a is configured to limit the magnitude of an overall bending moment within the strengthened peripheral portion 931a.

In some embodiments, a cover member may include two strengthened peripheral zones that are strengthened differently. FIG. 9B shows an example of an ion-exchanged layer in another curved peripheral portion. The curved peripheral portion 931b of FIG. 9B may be referred to herein as a second curved peripheral portion, and the curved peripheral portion 931a may be referred to herein as a first curved peripheral portion.

The strengthened peripheral zone and at least some of the regions of the ion-exchanged layer 951b in the example of FIG. 9B are different from the strengthened peripheral zone and the at least some of the regions of the ion-exchanged layer 951a shown in the example of FIG. 9A. As shown in FIG. 9B, the peripheral portion 931b includes an ion-exchanged layer 951b that extends from an exterior surface 943b to a depth D₆, extends from an interior surface 945b to a depth D₇, and extends from a side surface 946b to a depth D_{3B}. In the example of FIG. 9B, the region 963b of the ion-exchanged layer 951b is substantially symmetric with the region 965b of the ion-exchanged layer and the depths D₆ and D₇ are substantially the same (e.g., differing by no more than 10%). The depth D_{3B} of the region 966b of the ion-exchanged layer 951b greater than the depths D₆ and D₇. In other examples, the depths D₆ and D₇ need not be substantially the same but the difference between these depths may be less than shown in the example of FIG. 9A. Therefore, the strengthening of the curved peripheral portion of the cover member 930b can help improve the resistance of the cover member to an impact at a peripheral region of the curved exterior surface in a similar fashion as previously described with respect to FIG. 9A.

As shown in FIG. 9B, the depth D₆ is less than the depth D₁ and the depth D₇ is greater than the depth D₂.The depth D_{3B} may be equal to, less than, or greater than the depth D_{3A}. The reduced asymmetry between ion-exchanged layer 951b at the exterior and interior surfaces as compared to the ion-exchanged layer 951a can help to limit shape change of the cover due to ion exchange. FIG. 9B also indicates the exterior surface 942b and the interior surface 944b of the cover member 930b. The exterior surface 942b and the interior surface 944b may be similar to the exterior surface 942a and the interior surface 944a of FIG. 9A.

In some embodiments, a cover member having two differently strengthened peripheral zones can provide several benefits. In some examples, each of the two differently strengthened peripheral zones can contribute to the resistance of the cover member to an impact at a peripheral region of the curved exterior surface. In additional examples, inclusion of symmetrically ion-exchanged regions at the exterior and interior surfaces of one of the peripheral zones can help limit potential shape change of the cover member due to bending.

In some embodiments, the cover member includes another strengthened zone that is offset from the periphery and that is strengthened differently from a peripheral zone. As shown in FIG. 9C, the central portion 932c of the cover member is symmetrically strengthened. The central portion 932c includes an ion-exchanged layer 951c extending from an exterior surface 947c to a depth D₄ and extending from an interior surface 948c to a depth D₅. The region 967c is symmetric with the region 968c of the ion-exchanged layer 951c and depths D₄ and D₅ are substantially the same. As shown in FIG. 9C, the depth D₄ is less than the depth D1 and the depth D₅ is greater than the depth D₂. However, this example is not intended to be limiting and in other examples the regions 967c and the region 968c need not be symmetric. In some embodiments, inclusion of a symmetrically strengthened central zone can help limit potential shape change of a cover member including an asymmetrically strengthened peripheral zone. The exterior surface 942c and the interior surface 944c of the cover member 930c may be similar to the exterior surface 942a and the interior surface 944a of FIG. 9A.

Formation of the ion-exchanged layers 951a, 951b, and 951c within the cover members 930a, 930b, and 930c typically introduce compressive stress and tensile stress into the cover member. In some embodiments, a compressive stress zone is formed within the ion-exchanged layer(s). FIGs. 10A-10B show an example of a compressive stress zone and a tensile stress zone formed within a curved peripheral portion of a cover member. In some embodiments, a compressive stress region is formed within each of the ion-exchanged layers. Each compressive stress region typically defines a compressive stress profile, examples of which are shown in FIGs. 11 and 12A-B. Asymmetric compressive stress profiles applicable to the ion-exchanged layer 951a of FIG. 9A are described at least with respect to FIG. 11. Symmetric compressive stress profiles applicable to the ion-exchanged layer 951b of FIG. 9B are described at least with respect to FIG. 12A.

FIG. 10A shows an example of an internal stress distribution in a contoured cover member. The internal stress distribution shown in FIG. 10A may be an example of the internal stress distribution in detail area 7-7 of FIG. 7 and the curved peripheral portion 931a of FIG. 9A. As shown in FIG. 10A, the curved peripheral portion 1031a of the cover member 1030a includes a compressive zone 1076a that extends from the curved exterior surface 1043a, the curved interior surface 1045a, and the side surface 1046a. As previously described with respect to FIG. 3, one or more parameters of the compressive zone 1076a may vary within the curved portion 1031a. These parameters include, but are not limited to a depth of compression, a surface compressive stress, and a compressive stress profile of the compressive zone. In the example of FIG. 10A, the compressive zone 1076a extends to a greater depth from the side surface 1046a than from the curved exterior surface 1043a. In addition, the compressive zone 1076a extends to a greater depth from the curved exterior surface 1043a than from the curved interior surface 1045a. In some embodiments, a first compressive stress profile may extend from the curved exterior surface 1043a, a second compressive stress profile may extend from the curved interior surface 1045a, and a third compressive stress profile may extend from the side surface 1046a. An example of different compressive stress profiles extending from the curved exterior and interior surfaces of the cover member is shown in FIG. 11 and the description provided with respect to FIG. 11 is generally applicable herein.

The cover member 1030a also includes a tensile zone 1086a. The dashed line 1092a indicates a boundary between the compressive zone 1076a and the tensile one 1086a. The tensile zone 1086a is offset from the side surface 1046a of the cover member 1030a and includes a region of higher tensile stress 1088a. In some cases, the compressive zone 1076a is configured so that a location of the maximum tensile stress in the tensile region 1088a is offset from one or more locations of the cover member 1030a that may be more likely to experience impact when the electronic device is dropped. As an example, the location of higher tensile stress within the tensile region 1088a may be offset from a peripheral region of the curved exterior surface 1043a near the side surface 1046a of the cover member.

FIG. 10B shows an example of an internal stress distribution in a contoured cover member. The internal stress distribution shown in FIG. 10B may be an example of the internal stress distribution in detail area 7-7 of FIG. 7 and in the curved peripheral portion 931b of FIG. 9B. As shown in FIG. 10B, the curved peripheral portion 1031b of the cover member 1030b includes a compressive zone 1076b that extends from the curved exterior surface 1043b, the curved interior surface 1045b, and the side surface 1046b. In the example of FIG. 10B, the compressive zone 1076b extends to a greater depth from the side surface 1046b than from the curved exterior surface 1043b and from the curved interior surface 1045b. Examples of different compressive stress profiles extending from the curved exterior and interior surfaces of the cover member 1030b are shown in FIGs. 12A and 12B and the description provided with respect to FIGs. 12A and 12B is generally applicable herein.

The cover member 1030b also includes a tensile zone 1086b. The dashed line 1092b indicates a boundary between the compressive zone 1076b and the tensile one 1086b. The tensile zone 1086b is offset from the side surface 1046b of the cover member 1030b and includes a region of higher tensile stress 1088b. In some cases, the compressive zone 1076b is configured so that a location of the maximum tensile stress in the tensile region 1088b is offset from one or more locations of the cover member 1030b, as previously discussed with respect to FIG. 10A.

FIG. 11 shows an example of a stress profile in a portion of a contoured cover member. The asymmetric stress profile 1151 shown in FIG. 11 may be an example of the stress profile in a curved peripheral portion of the cover member, such as the curved peripheral portion shown in FIG. 7. The stress profile 1151 may be taken along line D-D in FIG. 7. As shown in FIG. 11, the stress profile 1151 includes a compressive stress profile 1172 that extends from a curved exterior surface of the cover member, alternately referred to herein as a first compressive stress profile 1172. The compressive stress profile 1172 defines a depth of compression DOCε and a compressive surface stress CS_{E} at the curved exterior surface. As previously discussed with respect to FIG. 7, the curved exterior surface may be an exterior convex surface. In the example of FIG. 11, the compressive stress profile 1172 defines a maximum compressive stress that is equal to the compressive surface stress CS_{E}. However, in other examples the maximum compressive stress may be positioned inward from the curved exterior surface.

The stress profile 1151 also includes a compressive stress profile 1174 that extends from a curved interior surface of the cover member, alternately referred to herein as a second stress profile 1174. The compressive stress profile 1174 defines a depth of compression DOC_{I} and a compressive surface stress CS_{I} at the curved interior surface. As previously discussed with respect to FIG. 7, the curved interior surface may be an interior concave surface. In the example of FIG. 11, the compressive stress profile 1174 defines a maximum compressive stress that is equal to the compressive surface stress CS_{I}. However, in other examples the maximum compressive stress may be positioned inward from the curved interior surface.

The compressive stress profile 1172 differs from the compressive stress profile 1174 and therefore the stress profile 1151 is asymmetric. In the example of FIG. 11, the compressive stress profile 1172 extending from the exterior surface has a depth of compression DOCε that is greater than the depth of compression DOC_{I} of the compressive stress profile 1174 extending from the interior surface. In some examples, the depth of compression DOCε is greater than or equal to 25% and less than or equal to 60% of the thickness of the cover member, greater than or equal to 30% and less than or equal to 70% of the thickness, or greater than or equal to 30% and less than or equal to 50% of the thickness. In some examples, the depth of compression DOC_{I} is greater than or equal to 1% and less than 20% of the thickness of the cover member, greater than or equal to 1% and less than or equal to 15% of the thickness, or greater than or equal to 1% and less than or equal to 10% of the thickness.

In the example of FIG. 11, the compressive stress profile 1172 extending from the curved exterior surface has a compressive surface stress CS_{E} that has a magnitude that is less than the magnitude of the compressive surface stress CS_{I} of the compressive stress profile 1174 extending from the curved interior surface. In some embodiments, compressive surface stress CS_{I} is from 1.5 to 2.5 times or from 1.5 to 2 times the compressive surface stress CS_{E.} As shown in FIG. 11, the compressive stress profile 1172 includes a first portion 1172a that extends from the curved exterior and that has a slope that is generally greater than that of the second portion 1172b.

The compressive stress profile 1174 shown in FIG. 11 may be described as defining a "spike" due to the higher maximum slope of the compressive stress profile 1174 as compared to the maximum slope of the compressive stress profile 1172. In some examples, the compressive stress profiles 1172 and the 1174 are configured to limit the magnitude of an overall local bending moment within the strengthened peripheral portion. The effect of the ion-exchanged layer in the strengthened peripheral portion was previously discussed with respect to FIG. 9A and that discussion is not repeated here.

The stress profile 1151 also includes a tensile stress profile 1 182, which may define a maximum tensile stress. The location of the maximum tensile stress is shifted towards the interior surface of the cover member due to the greater depth of compression DOCε as compared to the depth of compression DOC_{I}.

In some embodiments, another strengthened zone of the contoured cover member has a stress profile similar to that shown in FIG. 11. In other embodiments, the other portion has a stress profile that differs from that of FIG. 11, as shown in the example of FIGs. 12A and 12B. The other strengthened zone of the cover member may be positioned in at least one of a peripheral portion or a central portion of the cover member.

FIG. 12A shows an example of a stress profile in another strengthened zone. In the example of FIG. 12A, the stress profile 1251a is substantially symmetric. As shown in FIG. 12A, the stress profile 1251a includes a compressive stress profile 1272a that extends from an exterior surface of the cover member, a compressive stress profile 1274a that extends from an interior surface of the cover member, and a tensile stress profile 1282a. The compressive stress profile 1272a may alternately be referred to as a fourth compressive stress profile and the compressive stress profile 1274a may alternately be referred to as a fifth compressive stress profile. In some embodiments, the exterior surface may be a curved exterior surface and the interior surface may be a curved interior surface.

The compressive stress profile 1272a is similar to the compressive stress profile 1274a and therefore the stress profile 1251a is substantially symmetric. In some embodiments the compressive stress profile 1272a extending from the exterior surface has a depth of compression DOC_{12A} equal to the depth of compression of the compressive stress profile 1274a extending from the interior surface. The compressive surface stress CS_{12A} at the exterior surface has a magnitude that is substantially equal to the magnitude of the compressive surface stress at the interior surface

FIG. 12B shows another example of a stress profile in another portion of the cover member. The stress profile of FIG. 12B is asymmetric, but different from the asymmetric stress profile of FIG. 11. As shown in FIG. 12B, the stress profile 1251b includes a compressive stress profile 1272b that extends from an exterior surface of the cover member, a compressive stress profile 1274b that extends from an interior surface of the cover member, and a tensile stress profile 1282b. The compressive stress profile 1272b may alternately be referred to as a fourth compressive stress profile and the compressive stress profile 1274b may alternately be referred to as a fifth compressive stress profile. In some embodiments, the exterior surface may be a curved exterior surface and the interior surface may be a curved interior surface.

The compressive stress profile 1272b is different from the compressive stress profile 1274b and therefore the stress profile 1251b is substantially asymmetric. In some embodiments the compressive stress profile 1272b extending from the exterior surface has a depth of compression DOC_{12B} that is substantially equal to the depth of compression of the compressive stress profile 1274b extending from the interior surface. The compressive surface stress CS_{12BE} at the exterior surface that has a magnitude that is less than the magnitude of the compressive surface stress CS_{12BI} at the interior surface. In comparison to the compressive stress profile 1272a, the compressive stress profile 1272b has a greater depth of compression and a lower surface compressive stress. Similarly, the compressive stress profile 1274b has a greater depth of compression and a lower surface compressive stress than the compressive stress profile 1274a. The example of FIG. 12B is not intended to be limiting and other asymmetric stress profiles that are different from the stress profile of FIG. 11 may be suitable for the techniques described herein.

FIG. 13 shows an example block diagram of components of an electronic device. The electronic device 1300 may be an example of the electronic device 100 or any other electronic device described herein. As shown in FIG. 13, the electronic device includes a display 1302, a processor 1304, a power source 1306, a sensor system 1310, an input/output mechanism 1312, memory 1308, and a system 1314 in communication with the elements 1302, 1304, 1306, 1308, 1310, 1312 and 1314.

In embodiments, an electronic device 1300 may include a display 1302. The display 1302 may include a liquid-crystal display (LCD), a light-emitting diode (LED) display, an LED-backlit LCD display, an organic light-emitting diode (OLED) display, an active layer organic light-emitting diode (AMOLED) display, an organic electroluminescent (EL) display, an electrophoretic ink display, or the like. If the display 1302 is a liquid-crystal display or an electrophoretic ink display, the display 1302 may also include a backlight component that can be controlled to provide variable levels of display brightness. If the display 1302 is an organic light-emitting diode or an organic electroluminescent-type display, the brightness of the display 1302 may be controlled by modifying the electrical signals that are provided to display elements. In addition, information regarding configuration and/or orientation of the electronic device may be used to control the output of the display as described with respect to input devices 1312. In some cases, the display is integrated with a touch and/or force sensor in order to detect touches and/or forces applied along an exterior surface of the device 1300.

The device 1300 also includes a processor 1304. The processor 1304 may be operably connected with a computer-readable memory 1308. The processor 1304 may be operatively connected to the memory 1308 component via an electronic bus or bridge. The processor 1304 may be implemented as one or more computer processors or microcontrollers configured to perform operations in response to computer-readable instructions. The processor 1304 may include a central processing unit (CPU) of the device 1300. Additionally, and/or alternatively, the processor 1304 may include other electronic circuitry within the device 1300 including application specific integrated chips (ASIC) and other microcontroller devices. The processor 1304 may be configured to perform functionality described in the examples above.

The device 1300 also includes a power source 1306. In some embodiments, the power source includes a battery that is configured to provide electrical power to the components of the electronic device 1300. The battery may include one or more power storage cells that are linked together to provide an internal supply of electrical power. The battery may be operatively coupled to power management circuitry that is configured to provide appropriate voltage and power levels for individual components or groups of components within the electronic device 1300. The battery, via power management circuitry, may be configured to receive power from an external source, such as an alternating current power outlet. The battery may store received power so that the electronic device 1300 may operate without connection to an external power source for an extended period of time, which may range from several hours to several days.

The memory 1308 may include a variety of types of non-transitory computer-readable storage media, including, for example, read access memory (RAM), read-only memory (ROM), erasable programmable memory (e.g., EPROM and EEPROM), or flash memory. The memory 1308 is configured to store computer-readable instructions, sensor values, and other persistent software elements.

The device 1300 also includes a sensor system 1310. The sensor system 1310 may include one or more sensors or sensor components, such as a force sensor, a capacitive sensor, an accelerometer, a barometer, a gyroscope, a proximity sensor, a light sensor, a microphone, an acoustic sensor, a light sensor (including ambient light, infrared (IR) light, ultraviolet (UV) light), an optical facial recognition sensor, a depth measuring sensor (e.g., a time of flight sensor), a health monitoring sensor (e.g., an electrocardiogram (erg) sensor, a heart rate sensor, a photoplethysmogram (ppg) sensor, a pulse oximeter, a biometric sensor (e.g., a fingerprint sensor), or other types of sensing device. In some cases, the device 1300 includes a sensor array (also referred to as a sensing array) which includes multiple sensors. For example, a sensor array may include an ambient light sensor, a Lidar sensor, and a microphone. In additional examples, one or more camera components may also be associated with the sensor array. The sensor system 1310 may be operably coupled to processing circuitry. In some embodiments, the sensors may detect deformation and/or changes in configuration of the electronic device and be operably coupled to processing circuitry that controls the display based on the sensor signals. In some implementations, output from the sensor system is used to reconfigure the display output to correspond to an orientation or folded/unfolded configuration or state of the device. Example sensors for this purpose include accelerometers, gyroscopes, magnetometers, and other similar types of position/orientation sensing devices.

The input/output mechanism 1312 may include one or more input devices and one or more output devices. The input device(s) are devices that are configured to receive input from a user or the environment. An input device may include, for example, a push button, a touch-activated button, a capacitive touch sensor, a touch screen (e.g., a touch-sensitive display or a force-sensitive display), a capacitive touch button, dial, crown, or the like. In some embodiments, an input device may provide a dedicated or primary function, including, for example, a power button, volume buttons, home buttons, scroll wheels, and camera buttons. The one or more output devices include the display 1302 that renders visual information, which may be generated by the processor 1304. The one or more output devices may also include one or more speakers to provide audio output and/or one or more haptic devices that are configured to produce a haptic or tactile output along an exterior surface of the device 1300. The input/output mechanism may also include a communication port or a communication channel. A communication channel may include one or more wireless interface(s) that are adapted to provide communication between the processor 1304 and an external device, one or more antennas (e.g., antennas that include or use housing components as radiating members), communications circuitry, firmware, software, or any other components or systems that facilitate wireless communications with other devices.

The electronic device 1300 also includes a system 1314 in communication with the elements 1302, 1304, 1306, 1308, 1310, and 1312. In some examples, the system 1314 includes circuitry, such as electronic buses and/or bridges. The system 1314 may also include application specific integrated chips (ASIC) and other microcontroller devices.

As used herein, use of the term "substantially the same" or "substantially equal to" with respect to two values refers to a difference of no more than 10% between the two values.

The following discussion applies to the electronic devices described herein to the extent that these devices may be used to obtain personally identifiable information data. It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not intended to be exhaustive or to limit the embodiments to the precise forms disclosed. It will be apparent to one of ordinary skill in the art that many modifications and variations are possible in view of the above teachings.

### Additional Statements

There is provided an electronic device comprising a display, a housing at least partially enclosing the display, and a cover member coupled to the housing, formed from an ion-exchangeable silicate material, and defining a contoured shape, at least a portion of the display positioned along an interior concave surface of the contoured shape, the cover member comprising a first compressive stress profile extending from an exterior convex surface and into the cover member, the exterior convex surface opposite to the interior concave surface, and the first compressive stress profile having a first maximum compressive stress and a first depth and a second compressive stress profile extending from the interior concave surface and into the cover member, the second compressive stress profile having a second maximum compressive stress and a second depth, the second maximum compressive stress greater than the first maximum compressive stress and the second depth less than the first depth.

Preferably, wherein a maximum slope of the second compressive stress profile is greater than a maximum slope of the first compressive stress profile and the display is coupled to at least a portion of the interior concave surface.

Preferably, wherein the cover member further comprises a side compressive stress region extending from a side surface and into the cover member, the side compressive stress region having a third depth that is greater than the first depth.

Preferably, wherein the first depth is greater than or equal to 25% and less than or equal to 60% of a thickness of the cover member and the second depth is greater than or equal to 1% and less than or equal to 15% of the thickness of the cover member.

Preferably, wherein a peripheral portion of the cover member defines the exterior convex surface, the interior concave surface, and the side surface and a central portion of the cover member comprises a symmetric stress profile.

Preferably, wherein the exterior convex surface is a first exterior surface of the cover member, the interior concave surface is a first interior surface of the cover member, and the cover member comprises a fourth compressive stress profile extending from a second exterior surface of the cover member to a fourth depth that differs from the first depth by no more than 10% and a fifth compressive stress profile extending from a second interior surface of the cover member to a fifth depth that differs from the second depth by no more than 10%.

Preferably, wherein a central portion of the cover member defines the second exterior surface and the second interior surface.

There is provided an electronic device comprising a housing and a cover member coupled to the housing, defining a contoured shape, and formed from an ion-exchangeable silicate material comprising lithium ions, the cover member comprising an ion-exchanged layer defining a first layer depth from a curved exterior surface of the cover member, a second layer depth from a curved interior surface of the cover member that is opposite the curved exterior surface, the second layer depth less than the first layer depth, and a third layer depth from a side surface of the cover member, the third layer depth greater than the first layer depth, a first surface compressive stress at the curved exterior surface, a second surface compressive stress, greater than the first surface compressive stress, at the curved interior surface, and a display positioned below the cover member and at least partially within the housing.

Preferably, wherein a first region of the ion-exchanged layer extending from the curved exterior surface of the cover member comprises potassium ions and sodium ions and a second region of the ion-exchanged layer extending from the curved interior surface of the cover member comprises potassium ions.

Preferably, wherein the first region of the ion-exchanged layer extending from the curved exterior surface defines a first maximum sodium ion concentration and the second region of the ion-exchanged layer extending from the curved interior surface defines a second maximum sodium ion concentration that is less than the first maximum sodium ion concentration.

Preferably, wherein a third region of the ion-exchanged layer extending from the side surface comprises potassium ions and sodium ions and the third layer depth is in a range from 50% to 150% of a thickness of the cover member between the curved exterior surface and the curved interior surface.

Preferably, wherein the curved exterior surface is a curved first exterior surface, the curved interior surface is a curved first interior surface, the side surface is a first side surface, a peripheral portion of the cover member defines the curved first exterior surface, the curved first interior surface, and the first side surface, a central portion of the cover member defines a second exterior surface and a second interior surface, a fourth region of the ion-exchanged layer defines a fourth layer depth from the second exterior surface, the fourth layer depth less than the first layer depth, and a fifth region of the ion-exchanged layer defines a fifth layer depth from the second interior surface, the fifth layer depth greater than the second layer depth.

Preferably, wherein the peripheral portion of the cover member is a first peripheral portion, the cover member further comprises a second peripheral portion of the cover member that defines a curved third exterior surface, a curved third interior surface opposite the curved third exterior surface, and a second side surface, a sixth region of the ion-exchanged layer defines a sixth layer depth from the curved third exterior surface, the sixth layer depth less than the first layer depth, a seventh region of the ion-exchanged layer defines a seventh layer depth from the curved third interior surface, greater than the second layer depth, and an eighth region of the ion-exchanged layer defines an eighth depth, less than or equal to the third layer depth, from the second side surface.

Preferably, wherein a surface texture of the curved exterior surface defines a first root mean square height (Sq), and a surface texture of the curved interior surface defines a second root mean square height that is greater than the first root mean square height.

Preferably, wherein the ion-exchangeable silicate material is an aluminosilicate glass material.

There is provided an electronic device comprising a display, a housing at least partially surrounding the display, a cover member coupled to the housing, formed from an alkali aluminosilicate material and defining a contoured shape, the cover member positioned over the display and comprising a first compressive stress region defining a first compressive stress at a curved first exterior surface of the cover member and a first depth of compression, a second compressive stress region defining a second compressive stress at a curved first interior surface of the cover member and second depth of compression, the second compressive stress greater than the first compressive stress and the second depth of compression less than the first depth of compression, and a third compressive stress region extending from a side surface of the cover member to a third depth of compression, a fourth compressive stress region defining a fourth compressive stress at a second exterior surface of the cover member and a fourth depth of compression that is less than or equal to the first depth of compression, a fifth compressive stress region defining a fifth compressive stress at a second interior surface of the cover member and a fifth depth of compression that is greater than or equal to the second depth of compression, and a tensile zone at least partially surrounded by the first, the second, the third compressive stress regions.

Preferably, wherein the tensile zone comprises lithium ions, each of the first compressive stress region and the third compressive stress region comprises potassium ions and sodium ions, and the second compressive stress region comprises potassium ions.

Preferably, wherein the second compressive stress is at least twice the first compressive stress.

Preferably, wherein the fourth compressive stress region comprises potassium ions and sodium ions, and the fifth compressive stress region comprises potassium ions.

Preferably, wherein a magnitude of a first curvature of the curved first exterior surface is greater than a magnitude of a fourth curvature of the second exterior surface and a magnitude of a second curvature of the curved first interior surface is greater than a magnitude of a fifth curvature of the second interior surface.

Preferably, wherein the cover member defines a nonuniform thickness between the curved first exterior surface and the curved first interior surface.

## Claims

1. An electronic device comprising:
a display;
a housing at least partially enclosing the display; and
a cover member coupled to the housing, formed from an ion-exchangeable silicate material, and defining a contoured shape, at least a portion of the display positioned along an interior concave surface of the contoured shape, the cover member comprising:
a first compressive stress profile extending from an exterior convex surface and into the cover member, the exterior convex surface opposite to the interior concave surface, and the first compressive stress profile having a first maximum compressive stress and a first depth; and
a second compressive stress profile extending from the interior concave surface and into the cover member, the second compressive stress profile having a second maximum compressive stress and a second depth, the second maximum compressive stress greater than the first maximum compressive stress and the second depth less than the first depth.

2. The electronic device of claim 1, wherein:
a maximum slope of the second compressive stress profile is greater than a maximum slope of the first compressive stress profile; and
the display is coupled to at least a portion of the interior concave surface.

3. The electronic device of claim 2, wherein the cover member further comprises a side compressive stress region extending from a side surface and into the cover member, the side compressive stress region having a third depth that is greater than the first depth.

4. The electronic device of claim 3, wherein:
the first depth is greater than or equal to 25% and less than or equal to 60% of a thickness of the cover member; and
the second depth is greater than or equal to 1% and less than or equal to 15% of the thickness of the cover member.

5. The electronic device of claim 3 or claim 4, wherein:
a peripheral portion of the cover member defines the exterior convex surface, the interior concave surface, and the side surface; and
a central portion of the cover member comprises a symmetric stress profile.

6. The electronic device of any of claims 3 to 5, wherein:
the exterior convex surface is a first exterior surface of the cover member;
the interior concave surface is a first interior surface of the cover member; and
the cover member comprises:
a fourth compressive stress profile extending from a second exterior surface of the cover member to a fourth depth that differs from the first depth by no more than 10%; and
a fifth compressive stress profile extending from a second interior surface of the cover member to a fifth depth that differs from the second depth by no more than 10%.

7. The electronic device of claim 6, wherein a central portion of the cover member defines the second exterior surface and the second interior surface.

8. An electronic device comprising:
a housing; and
a cover member coupled to the housing, defining a contoured shape, and formed from an ion-exchangeable silicate material comprising lithium ions, the cover member comprising an ion-exchanged layer defining:
a first layer depth from a curved exterior surface of the cover member;
a second layer depth from a curved interior surface of the cover member that is opposite the curved exterior surface, the second layer depth less than the first layer depth; and
a third layer depth from a side surface of the cover member, the third layer depth greater than the first layer depth;
a first surface compressive stress at the curved exterior surface;
a second surface compressive stress, greater than the first surface compressive stress, at the curved interior surface; and
a display positioned below the cover member and at least partially within the housing.

9. The electronic device of claim 8, wherein:
a first region of the ion-exchanged layer extending from the curved exterior surface of the cover member comprises potassium ions and sodium ions; and
a second region of the ion-exchanged layer extending from the curved interior surface of the cover member comprises potassium ions.

10. The electronic device of claim 9, wherein:
the first region of the ion-exchanged layer extending from the curved exterior surface defines a first maximum sodium ion concentration; and
the second region of the ion-exchanged layer extending from the curved interior surface defines a second maximum sodium ion concentration that is less than the first maximum sodium ion concentration.

11. The electronic device of claim 9 or claim 10, wherein:
a third region of the ion-exchanged layer extending from the side surface comprises potassium ions and sodium ions; and
the third layer depth is in a range from 50% to 150% of a thickness of the cover member between the curved exterior surface and the curved interior surface.

12. The electronic device of any of claims 8 to 11, wherein:
the curved exterior surface is a curved first exterior surface;
the curved interior surface is a curved first interior surface;
the side surface is a first side surface;
a peripheral portion of the cover member defines the curved first exterior surface, the curved first interior surface, and the first side surface;
a central portion of the cover member defines a second exterior surface and a second interior surface; and
a fourth region of the ion-exchanged layer defines a fourth layer depth from the second exterior surface, the fourth layer depth less than the first layer depth; and
a fifth region of the ion-exchanged layer defines a fifth layer depth from the second interior surface, the fifth layer depth greater than the second layer depth.

13. The electronic device of claim 12, wherein:
the peripheral portion of the cover member is a first peripheral portion; and
the cover member further comprises a second peripheral portion of the cover member that defines a curved third exterior surface, a curved third interior surface opposite the curved third exterior surface, and a second side surface; and
a sixth region of the ion-exchanged layer defines a sixth layer depth from the curved third exterior surface, the sixth layer depth less than the first layer depth;
a seventh region of the ion-exchanged layer defines a seventh layer depth from the curved third interior surface, greater than the second layer depth; and
an eighth region of the ion-exchanged layer defines an eighth depth, less than or equal to the third layer depth, from the second side surface.

14. The electronic device of any of claims 8 to 13, wherein:
a surface texture of the curved exterior surface defines a first root mean square height (Sq); and
a surface texture of the curved interior surface defines a second root mean square height that is greater than the first root mean square height.

15. The electronic device of any of claims 8 to 14, wherein the ion-exchangeable silicate material is an aluminosilicate glass material.
